# EUROPEAN PATENT APPLICATION

(11) **EP 3 183 960 A1**
(43) Date of publication of application: **28.06.2017**
(21) Application number: 15202696.9
(22) Date of filing: 24.12.2015
(51) Int. Cl.: A01K 89/01

(54) **STRENGTHENED MAIN BODY OF FISHING REEL**

(71) Applicant: Okuma Fishing Tackle Co., Ltd., Taichung City 427 (TW)
(72) Inventor: Chang, Liang-Jen, Taichung City 427 (TW); Tu, Tsung-Jen, Taichung City 427 (TW)
(74) Representative: Becker Kurig Straus

(57) **Abstract**

A strengthened main body of a fishing reel includes a frame (10) and a housing (20). The frame (10) includes a sleeve portion (11), a supporting portion (12), and a connecting portion (13), which are integrally connected in order. The sleeve portion (11) has an installing space (101). The housing (20) is disposed in the installing space (101). The left and right sides of the sleeve portion (11) are fixed to the housing (20) by fastening members (31-33). As a result, the force applied on the housing (20) while the fishing reel is in use can be transmitted to the connecting portion (13) through the supporting portion (12) evenly. This means the supporting portion (12) receives the force evenly, thereby prevented from receiving the force on only one side thereof, so that the fishing reel has great structural strength. Besides, in the manufacturing process of the fishing reel, the accuracy required for the forming of the frame can be lowered, and the housing is uniform in thickness, so that the elements of the main body are simplified in structure, lowered in difficulty of forming, shortened in time of forming, and raised in efficiency of producing and yield rate.

## Description

### BACKGROUND OF THE INVENTION

### 1. Field of the Invention

The present invention relates generally to fishing reels and more particularly, to a strengthened main body of a fishing reel.

### 2. Description of the Related Art

A fishing reel is one of the necessaries for fishing, which is a transmission device composed of several main elements for rolling up the fishing line, and also a main member of fishing tackle for being fixed to a fishing rod and located in front of a handle of the fishing rod.

In the current technology, a main body of the fishing reel is usually a two-piece structure including a main piece and a side cover. The main piece has an installing portion, a supporting portion, and a connecting portion for being connected with the fishing rod, which are connected integrally. The inner accessories of the fishing reel are installed in the installing portion, and the side cover is fixed to the installing portion and covers the inner accessories of the fishing reel. While the fishing reel is in use, the installing portion and the side cover both receive relatively larger external force. The external force applied on the installing portion can be directly transmitted to the supporting portion and further transmitted to the connecting portion. However, the external force applied on the side cover should be transmitted to the supporting portion through the installing portion, and then transmitted to the connecting portion. Therefore, the supporting portion receives the external force on only one side thereof. This means the supporting portion, which is weak in structure, receives the external force uneven, so as to be easily damaged. Besides, such conventional structural design of the main body of the fishing reel causes the main piece a complicated structure and an uneven thickness, so that the main piece requires high accuracy and long time for forming, and is so difficult in forming as to raise the rejection rate.

### SUMMARY OF THE INVENTION

The present invention has been accomplished in view of the above-noted circumstances. It is an objective of the present invention to provide a main body of a fishing reel, which is effective to solve the problems of the conventional main body of the fishing reel in weak and complicated structure and difficult forming process.

To attain the above objective, the present invention provides a strengthened main body of a fishing reel, which is adapted for being connected with a fishing rod. The strengthened main body of the fishing reel includes a frame, and a housing for accommodating inner accessories of the fishing reel. The frame includes a sleeve portion, a supporting portion, and a connecting portion for being connected with the fishing rod, which are integrally connected in order. The sleeve portion has an installing space. The housing is disposed in the installing space. The left side and the right side of the sleeve portion are fixed to the housing by means of fastening members.

Preferably, the housing includes a left shell and a right shell, which are fixed to each other by means of a fastening screw.

Preferably, the sleeve portion is provided at the left side and the right side thereof with a first fastening hole and a second fastening hole respectively; the fastening members include a first screw inserted through the first fastening hole and the left shell and screwingly fixed to the right shell, and a second screw inserted through the second fastening hole and the right shell and screwingly fixed to the left shell.

Preferably, the sleeve portion has a left protrusion and a right protrusion, which are located at the left side and the right side of the sleeve portion respectively and symmetric with each other; the first fastening hole and the second fastening hole are located at the left protrusion and the right protrusion respectively; the left shell is provided at a lateral surface thereof with a left concave; the right shell is provided at a lateral surface thereof with a right concave; the left protrusion and the right protrusion are embedded in the left concave and the right concave respectively.

Preferably, the fastening members further include a third screw inserted through the front side of the bottom of the sleeve portion and screwingly fixed to the housing.

Preferably, the left shell has a first positioning hole and a first positioning column provided with a first threaded hole; the right shell has a second positioning hole and a second positioning column provided with a second threaded hole; the second positioning column is inserted in the first positioning hole, and the first positioning column is inserted in the second positioning hole; the first screw is inserted through the first fastening hole and the first positioning hole in order and screwed into the second threaded hole; the second screw is inserted through the second fastening hole and the second positioning hole in order and screwed into the first threaded hole.

Preferably, each of the left shell and the right shell is provided at the bottom thereof with a first convex; the sleeve portion is provided at the bottom thereof with a first trough communicating with the installing space; the first convexes are embedded in the first trough.

Preferably, each of the left shell and the right shell is provided at the rear side thereof with a second convex; the sleeve portion is provided at the rear side thereof with a second trough communicating with the installing space; the second convexes are embedded in the second trough.

Preferably, the frame is made of carbon fiber reincorced plastic or plastic.

Preferably, the housing is made of carbon fiber reincorced plastic, plastic or metal.

Compared with the current technology, the present invention has obvious advantages and beneficial effect, which can be learned from the above-mentioned technology of the present invention and are specified below.

Resulted from that the sleeve portion has the installing space, the housing is disposed in the installing space, and the left and right sides of the sleeve portion are fixed to the housing by means of the fastening members, the force applied on the housing while the fishing reel is in use can be transmitted to the connecting portion through the supporting portion evenly. This means the supporting portion receives the force evenly, thereby prevented from receiving the force on only one side thereof, so that the fishing reel has great structural strength. Besides, in the manufacturing process of the fishing reel, the accuracy required for the forming of the frame can be lowered, and the housing is uniform in thickness, so that the elements of the main body are simplified in structure, lowered in difficulty of forming, shortened in time of forming, and raised in efficiency of producing and yield rate.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is an assembled perspective view of a preferred embodiment of the present invention;
FIG. 2 is an exploded perspective view of the preferred embodiment of the present invention from a same direction with FIG. 1;
FIG. 3 is an assembled perspective view of the preferred embodiment of the present invention from another direction;
FIG. 4 is an exploded perspective view of the preferred embodiment of the present invention from the same direction with FIG. 3;
FIG. 5 is an assembled perspective view of the preferred embodiment of the present invention from a further direction; and

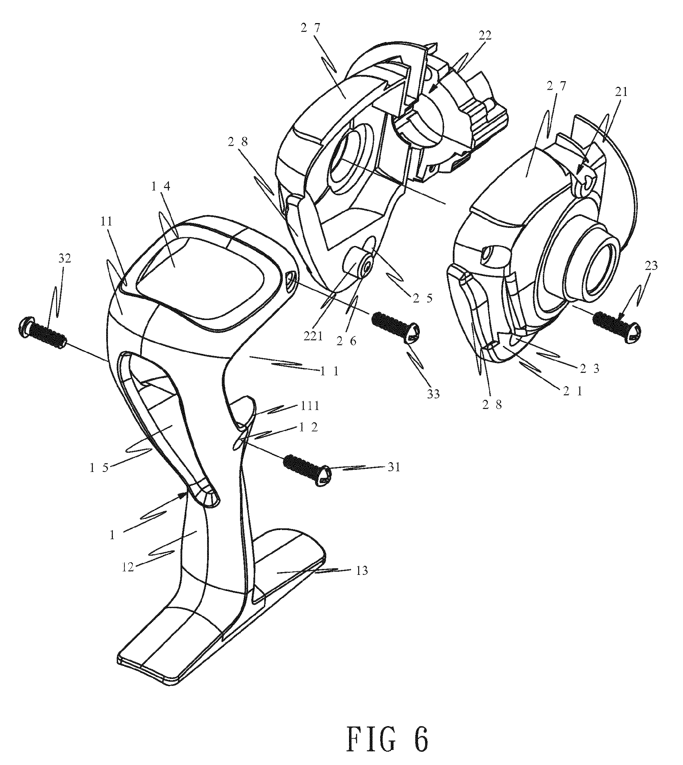

FIG. 6 is an exploded perspective view of the preferred embodiment of the present invention from the same direction with FIG. 5.

### DETAILED DESCRIPTION OF THE INVENTION

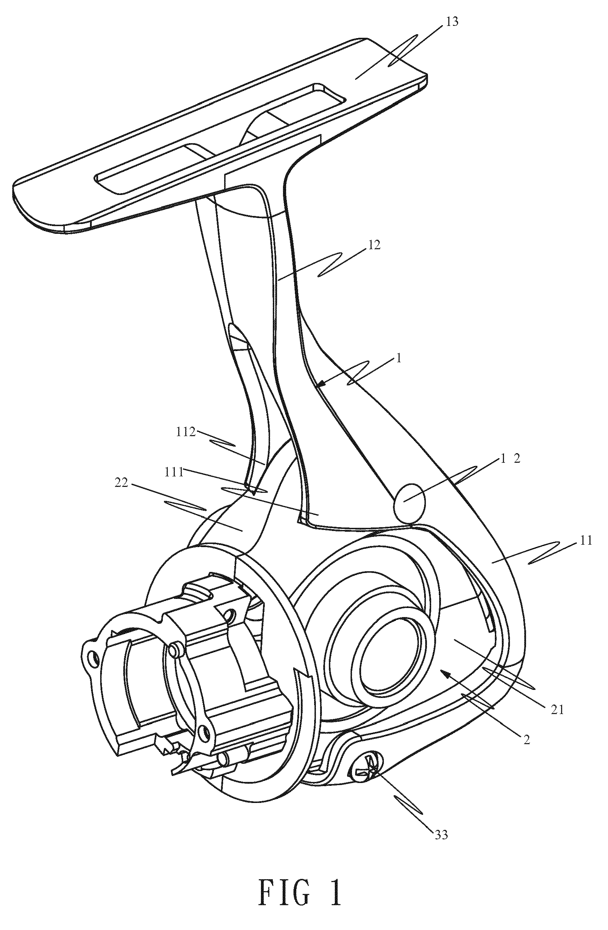

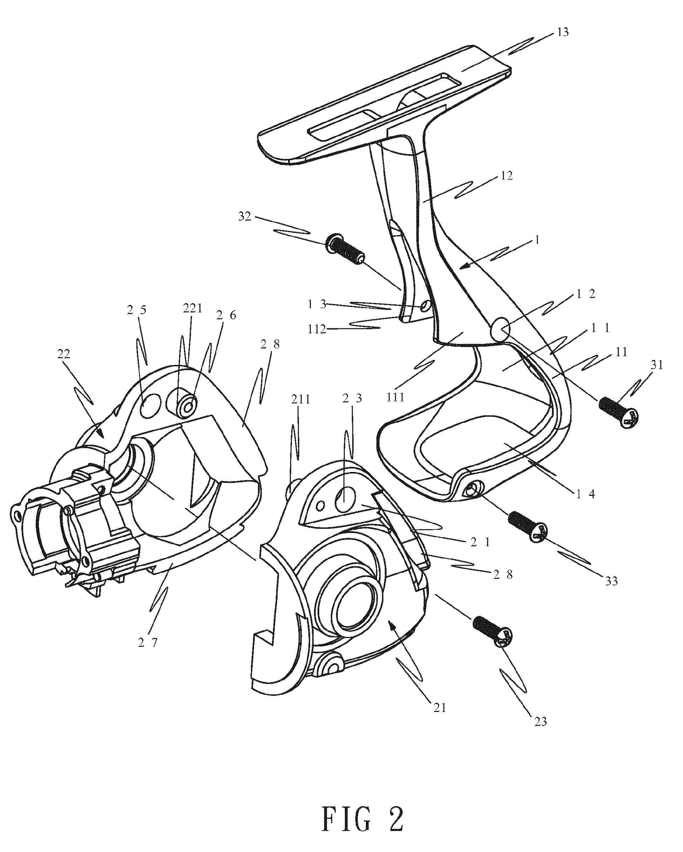

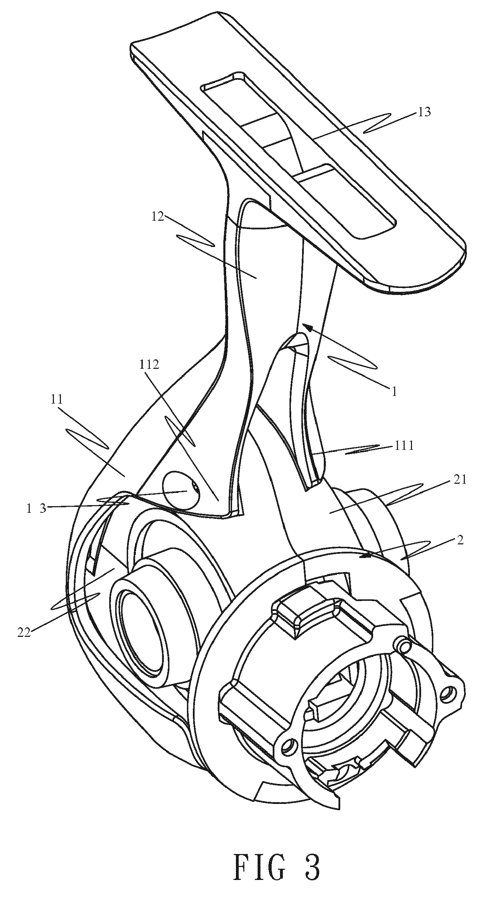

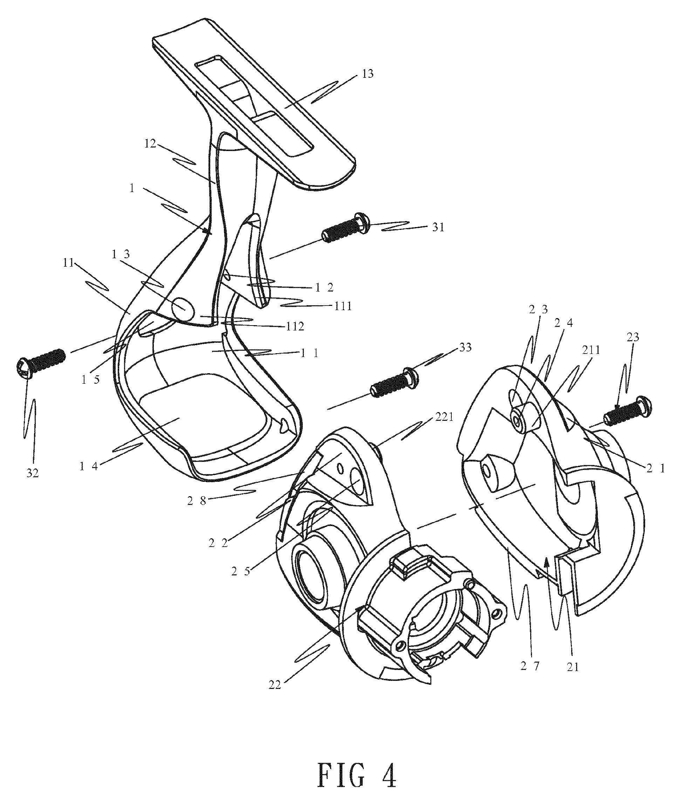

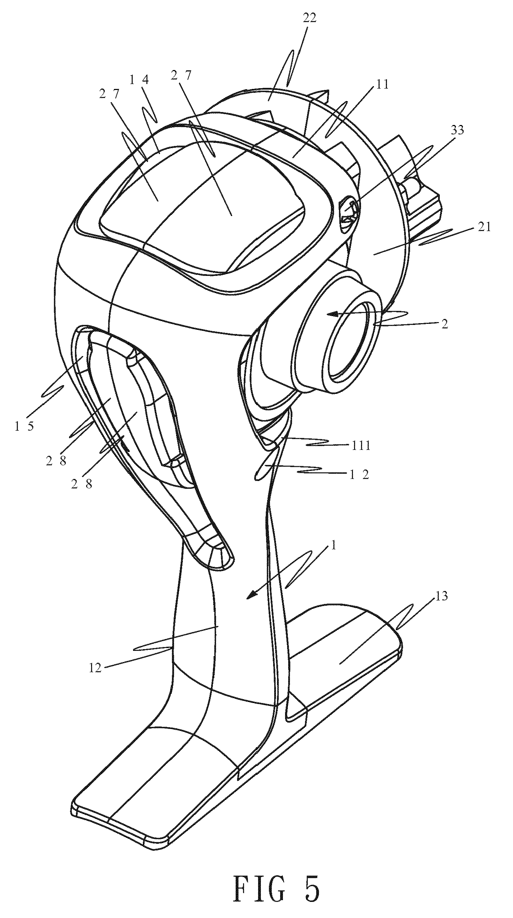

Referring to FIGS. 1-5, which illustrate the concrete structure of a main body of a fishing reel according to a preferred embodiment of the present invention, the main body includes a frame 10, and a housing 20 for accommodating inner accessories of the fishing reel.

The frame 10 is integrally made of carbon fiber reincorced plastic, plastic or metal, and includes a sleeve portion 11, a supporting portion 12, and a connecting portion 13 for being connected with a fishing rod, which are integrally connected in order. The sleeve portion 11 has an installing space 101. The housing 20 is made of carbon fiber reincorced plastic or plastic, and installed in the installing space 101. The left side and the right side of the sleeve portion 11 are fixed to the housing 20 by means of fastening members.

Specifically speaking, the housing 20 in this embodiment may include a left shell 21 and a right shell 22, which are fixed to each other by means of a fastening screw 23. The sleeve portion 11 is provided at the left side and the right side thereof with a first fastening hole 102 and a second fastening hole 103 respectively. The fastening members may include a first screw 31 inserted through the first fastening hole 102 and the left shell 21 and screwingly fixed to the right shell 22, and a second screw 32 inserted through the second fastening hole 103 and the right shell 22 and screwingly fixed to the left shell 21, so that the connection between the sleeve portion 11 and the housing 20 is firm, stable, and strong in structure. Besides, the sleeve portion 11 may have a left protrusion 111 and a right protrusion 112, which are located at the left side and the right side of the sleeve portion 11 respectively and symmetric with each other. The first fastening hole 102 and the second fastening hole 103 are located at the left protrusion 111 and the right protrusion 112 respectively. The left shell 21 is provided at a lateral surface thereof with a left concave 201. The right shell 22 is provided at a lateral surface thereof with a right concave 202. The left protrusion 111 and the right protrusion 112 are embedded in the left concave 201 and the right concave 202 respectively. The fastening members may further include a third screw 33 inserted through the front side of the bottom of the sleeve portion 11 and screwingly fixed to the housing 20.

The left shell 21 may have a first positioning hole 203 and a first positioning column 211 provided with a first threaded hole 204. The right shell 22 may have a second positioning hole 205 and a second positioning column 221 provided with a second threaded hole 206. The second positioning column 221 is inserted in the first positioning hole 203, and the first positioning column 211 is inserted in the second positioning hole 205. The first screw 31 is inserted through the first fastening hole 102 and the first positioning hole 203 in order and screwed into the second threaded hole 206. The second screw 32 is inserted through the second fastening hole 103 and the second positioning hole 205 in order and screwed into the first threaded hole 204.

In addition, each of the left shell 21 and the right shell 22 may be provided at the bottom thereof with a first convex 207, and the sleeve portion 11 is provided at the bottom thereof with a first trough 104 communicating with the installing space 101. The first convexes 207 are embedded in the first trough 104. Besides, each of the left shell 21 and the right shell 22 may be provided at the rear side thereof with a second convex 208, and the sleeve portion 11 is provided at the rear side thereof with a second trough 105 communicating with the installing space 101. The second convexes 208 are embedded in the second trough 105.

The assembling process of the fishing reel according to this embodiment is described below.

At first, the inner accessories of the fishing reel are installed in the left shell 21 or the right shell 22, and then the left shell 21 and the right shell 22 are fixed to each other by means of the fastening screw 23 to compose the housing 20, such that the inner accessories of the fishing reel are accommodated in the housing 20. After that, the housing 20 is disposed in the installing space 101 in a way that the first convexes 207 are embedded in the first trough 104, and the second convexes 208 are embedded in the second trough 105. Then, the first screw 31 is inserted through the first fastening hole 102 and the left shell 21 and screwingly fixed to the right shell 22, the second screw 32 is inserted through the second fastening hole 103 and the right shell 22 and screwingly fixed to the left shell 21, and the third screw 33 is inserted through the front side of the bottom of the sleeve portion 11 and screwingly fixed to the housing 20.

The main features of the present invention are that the sleeve portion has the installing space, the housing is disposed in the installing space, and the left and right sides of the sleeve portion are fixed to the housing by means of the fastening members. Resulted from such features, the force applied on the housing while the fishing reel is in use can be transmitted to the connecting portion through the supporting portion evenly. This means the supporting portion receives the force evenly, thereby prevented from receiving the force on only one side thereof, , so that the fishing reel has great structural strength. Besides, in the manufacturing process of the fishing reel, the accuracy required for the forming of the frame can be lowered, and the housing is uniform in thickness, so that the elements of the main body are simplified in structure, lowered in difficulty of forming, shortened in tine of forming, and raised in efficiency of producing and yield rate.

The above description represents merely the preferred embodiment of the present invention, without any intention to limit the scope of the present invention. Therefore, any alteration, equivalent variation or modification substantially according to the technology of the present invention is intended to be included within the scope of the following claims.

## Claims

1. A strengthened main body of a fishing reel, which is adapted for being connected with a fishing rod, being **characterized in that** the strengthened main body comprises a frame (10), and a housing (20) for accommodating inner accessories of the fishing reel; the frame (10) comprises a sleeve portion (11), a supporting portion (12), and a connecting portion (13) for being connected with the fishing rod, which are integrally connected in order; the sleeve portion (11) has an installing space (101); the housing (20) is disposed in the installing space (101); a left side and a right side of the sleeve portion (11) are fixed to the housing (20) by means of fastening members (31-33).

2. The strengthened main body of the fishing reel as claimed in claim 1, which is **characterized in that** the housing (20) comprises a left shell (21) and a right shell (22), which are fixed to each other by means of a fastening screw (23).

3. The strengthened main body of the fishing reel as claimed in claim 2, which is **characterized in that** the sleeve portion (11) is provided at the left side and the right side thereof with a first fastening hole (102) and a second fastening hole (103) respectively; the fastening members comprise a first screw (31) inserted through the first fastening hole (102) and the left shell (21) and screwingly fixed to the right shell (22), and a second screw (32) inserted through the second fastening hole (103) and the right shell (22) and screwingly fixed to the left shell (21).

4. The strengthened main body of the fishing reel as claimed in claim 3, which is **characterized in that** the sleeve portion (11) has a left protrusion (111) and a right protrusion (112), which are located at the left side and the right side of the sleeve portion (11) respectively and symmetric with each other; the first fastening hole (102) and the second fastening hole (103) are located at the left protrusion (111) and the right protrusion (112) respectively; the left shell (21) is provided at a lateral surface thereof with a left concave (201); the right shell (22) is provided at a lateral surface thereof with a right concave (202); the left protrusion (111) and the right protrusion (112) are embedded in the left concave (201) and the right concave (202) respectively.

5. The strengthened main body of the fishing reel as claimed in claim 3, which is **characterized in that** the fastening members further comprise a third screw (33) inserted through a front side of a bottom of the sleeve portion (11) and screwingly fixed to the housing (20).

6. The strengthened main body of the fishing reel as claimed in claim 3, which is **characterized in that** the left shell (21) has a first positioning hole (203) and a first positioning column (211) provided with a first threaded hole (204); the right shell (22) has a second positioning hole (205) and a second positioning column (221) provided with a second threaded hole (206); the second positioning column (221) is inserted in the first positioning hole (203), and the first positioning column (211) is inserted in the second positioning hole (205); the first screw (31) is inserted through the first fastening hole (102) and the first positioning hole (203) in order and screwed into the second threaded hole (206); the second screw (32) is inserted through the second fastening hole (103) and the second positioning hole (205) in order and screwed into the first threaded hole (204).

7. The strengthened main body of the fishing reel as claimed in claim 2, which is **characterized in that** each of the left shell (21) and the right shell (22) is provided at a bottom thereof with a first convex (207); the sleeve portion (11) is provided at a bottom thereof with a first trough (104) communicating with the installing space (101); the first convexes (207) are embedded in the first trough (104).

8. The strengthened main body of the fishing reel as claimed in claim 7, which is **characterized in that** each of the left shell (21) and the right shell (22) is provided at a rear side thereof with a second convex (208); the sleeve portion (11) is provided at a rear side thereof with a second trough (105) communicating with the installing space (101); the second convexes (208) are embedded in the second trough (105).

9. The strengthened main body of the fishing reel as claimed in claim 2, which is **characterized in that** each of the left shell (21) and the right shell (22) is provided at a rear side thereof with a second convex (208); the sleeve portion (11) is provided at a rear side thereof with a second trough (105) communicating with the installing space (101); the second convexes (208) are embedded in the second trough (105).

10. The strengthened main body of the fishing reel as claimed in claim 1, which is **characterized in that** the frame (10) is made of one of carbon fiber reinforced plastic and plastic.

11. The strengthened main body of the fishing reel as claimed in claim 1, which is **characterized in that** the housing (20) is made of one of carbon fiber reinforced plastic, plastic and metal.
